# EUROPÄISCHE PATENTSCHRIFT

(11) **EP 3 177 514 B1**
(45) Veröffentlichungstag und Bekanntmachung des Hinweises auf die Patenterteilung: **10.10.2018**
(21) Anmeldenummer: 15747490.9
(22) Anmeldetag: 07.08.2015
(51) Int. Cl.: B62D 35/02, B60T 5/00, B62D 25/16

(54) **LUFTLEITANORDNUNG UND FAHRZEUG MIT ZUMINDEST EINER LUFTLEITANORDNUNG**
AIR-GUIDING ARRANGEMENT AND VEHICLE WITH AT LEAST ONE AIR-GUIDING ARRANGEMENT
ENSEMBLE DE GUIDAGE D'AIR ET VÉHICULE COMPORTANT AU MOINS UN ENSEMBLE DE GUIDAGE D'AIR

(30) Priorität: 08.08.2014 DE 102014215732
(43) Veröffentlichungstag der Anmeldung: 14.06.2017
(73) Patentinhaber: Bayerische Motoren Werke Aktiengesellschaft, 80809 München (DE)
(72) Erfinder: SCHMIDT, Andreas, 85055 Ingolstadt (DE); ENGFER, Daniel, 85386 Eching (DE)
(86) Internationale Anmeldenummer: PCT/EP2015/068245
(87) Internationale Veröffentlichungsnummer: WO 2016/020520

(56) Entgegenhaltungen:
- DE-A1- 10 213 650
- DE-C1- 4 334 009
- US-A- 4 810 021

## Beschreibung

Die Erfindung betrifft eine Luftleitanordnung, und betrifft insbesondere eine Luftleitanordnung für ein Fahrzeug sowie ein Fahrzeug mit zumindest einer Luftleitanordnung.

### Stand der Technik

Radspoiler sind als so genannte "Staulippen" vor den Rädern eines Fahrzeugs angeordnet und verlaufen etwa quer zur Fahrtrichtung. Sie bilden Luftleitanordnungen, die einen Teil der auf ein Fahrzeug auftreffenden Fahrtwindströmung beeinflussen. Beispiele derartiger Radspoiler sind aus der EP 2 039 595 A1, der EP 1 674 381 A1 und der DE 10 2011 089 074 A1 bekannt. Mit den Radspoilern kann eine Umströmung der dahinter liegenden Räder und die Durchströmung der Radhäuser beeinflusst werden, so dass sich zum Beispiel ein verringerter Luftwiderstandsbeiwert in Fahrtrichtung ergibt. Zudem kann die Balance des Fahrzeugs beeinflusst bzw. abgestimmt werden.

Aus der DE 43 34 009 C1 ist eine Bugverkleidung für ein Kraftfahrzeug bekannt, bei der vor einem jeweiligen Vorderrad nebeneinander verlaufende und in Fahrzeughochrichtung gekrümmte Luftleitbahnen vorgesehen sind, zwischen denen ein Kanal ausgebildet ist, der gegen die Radinnenseite gerichtet ist. Durch die konvex zur Fahrbahn verlaufende Krümmung der jeweiligen Luftleitbahn soll eine gute aerodynamischen Umströmung des Rades erzielt werden, wobei der Staupunkt der Anströmung vor dem Rad nach unten in Richtung Fahrbahn verlegt werden soll, wodurch ein hoher Druck im Radhaus vor dem Vorderrad verhindert werden soll. Die Strömung durch den Kanal in Richtung der Fahrzeugbremsen soll eine verbesserte Bremsenkühlung bewirken.

Aus der DE 10 2010 055 639 A1 ist ein Fahrzeug mit einer Verkleidung bekannt, in der vor dem jeweiligen Vorderrad ein mittels einer Klappe absperrbarer Kanal vorgesehen ist, der in geöffnetem Zustand Luft zur Radinnenseite leitet.

Aus der DE 10 2010 036 442 A1 ist eine Luftleitvorrichtung am Unterboden eines Fahrzeugs vor einem Fahrzeugrad bekannt, die aus flexiblem Material gebildet ist, und die aus zwei Halbschalen besteht, die am Fahrzeugunterboden befestigt sind und zwischen sich einen Kanal bilden, wobei die Öffnungen der Halbschalen zum Kanal weisen. Hinter diesen Halbschalen ist ein die anströmende Luft stauender Spoiler vorgesehen. Die aufgestaute Luft dringt dabei vom Kanal in die jeweilige Halbschale durch deren Öffnung ein und bläht die jeweilige Halbschale zu einem konvexen Gebilde auf. Auf diese Weise soll bei hohen Fahrgeschwindigkeiten eine stärkere Wölbung dieser Elemente der Luftleitvorrichtung erzielt werden, um die Fahrzeugaerodynamik der Unterströmung des Fahrzeugs zu beeinflussen.

### Offenbarung der Erfindung

Es ist die Aufgabe der vorliegenden Erfindung, eine Luftleitanordnung, insbesondere eine Luftleitanordnung für ein Fahrzeug, insbesondere für einen PKW, bereitzustellen, die die konvektive Wärmeabfuhr an den Bremsenkomponenten, den Luftwiderstandsbeiwert und die Auftriebsbalance eines Fahrzeugs verbessert.

Diese Aufgabe wird durch die Luftleitanordnung mit den Merkmalen des unabhängigen Anspruchs 1 gelöst. Bevorzugte Ausführungsformen und besondere Aspekte der Erfindung ergeben sich aus den abhängigen Ansprüchen, den Zeichnungen und der vorliegenden Beschreibung.

Gemäß einem Aspekt der vorliegenden Erfindung ist eine Luftleitanordnung für ein Fahrzeug angegeben, die im Bereich vor einem Fahrzeugrad angeordnet ist und nach unten in Richtung der Fahrbahn absteht. Die Luftleitanordnung umfasst zumindest einen vor dem Fahrzeugrad positionierten Luftleitkörper, der von einem Unterboden-Verkleidungsteil nach unten in Richtung der Fahrbahn absteht, einen im Luftleitkörper oder auf der von der Fahrzeugaußenseite weg weisenden Seite des Luftleitkörpers gelegenen Kanal, der ausgelegt ist, um anströmende Fahrtluft in Richtung der Bremsanlage zu leiten. Erfindungsgemäß weist der Luftleitkörper eine erste Staulippe auf, die zwischen dem Luftleitkörper und dem Fahrzeugrad angeordnet ist und die nach unten in Richtung auf die Fahrbahn über den Luftleitkörper hervorsteht. Auf der von der Fahrzeugaußenseite weg weisenden Seite des zumindest einen Kanals ist eine zweite Staulippe vorgesehen, so dass der zumindest eine Kanal einen Spalt zwischen der ersten Staulippe und der zweiten Staulippe umfasst.

Der zumindest eine Kanal ist ausgelegt, um Luft in Richtung der Bremsanlage zu leiten, so dass die konvektive Kühlung der Bremsenkomponenten verbessert wird. Das erfolgt in Einklang mit dem Luftwiderstand und der Auftriebsbalance. Mit dieser Anordnung ist es also möglich, die Bremsenkühlung zu verbessern, und sie kann gleichzeitig einen Beitrag zur Optimierung von Luftwiderstand und Auftriebsbalance leisten. Eine derart verbesserte Luftführung im Bereich der Bremsen kann nicht nur eine verbesserte Kühlung der Bremsen und umliegender Bauteile bewirken, sondern außerdem die Verschmutzung der Bremsen reduzieren und das Nassansprechen der Bremsen verbessern.

Während der Luftleitkörper durchaus eine bestimmte Richtungsweisung für die Strömung vornehmen soll, dient die Staulippe an oder hinter dessen Ende dazu, eine Aufstauwirkung für die anströmende Luft zu erzielen. Diese Aufstauwirkung kann in vorteilhafter Weise zur Abstimmung des aerodynamisch generierten Auftriebs des Fahrzeugs genutzt werden. Über die Höhe der Staulippe lässt sich ein definiertes Auftriebsverhalten generieren. Dadurch kann auch ein gezielter Strömungsabriss generiert werden. Der Vorteil einer Staulippe ist zudem, dass diese seitlich und über den Staukörper gezielt überstehen kann, auch wenn der eigentliche Staukörper schon geendet hat.

Es kann zudem von Vorteil sein, die Staukörpergröße zu variieren, zum Beispiel wenn sich eine bestimmte Auftriebsbalance (größerer oder kleinerer Auftrieb) einstellen soll. Flexibilität bietet hier vor allem ein Konzept mit voneinander getrennten Körpern. Bei bestimmten Fahrzeugkonfigurationen könnte beispielsweise sogar auch ein Körper ganz weggelassen werden.

Vorteilhafte Weiterbildungen der erfindungsgemäßen Luftleitanordnung sind in den Ansprüchen 2 bis 14 angegeben. Die Merkmale dieser Weiterbildungen können einzeln oder in Kombination miteinander mit den Merkmalen des Hauptanspruchs kombiniert werden.

Vorteilhaft ist eine Ausführungsform, bei der der wenigstens eine Luftleitkörper, die wenigstens eine Staulippe und der wenigstens eine Kanal als integrales Bauteil ausgebildet sind.

Auch von Vorteil ist es, wenn der wenigstens eine Luftleitkörper und die erste Staulippe als integrales Bauteil ausgebildet sind, und wobei die zweite Staulippe ein davon räumlich getrenntes Bauteil ist.

Vorzugsweise sind der wenigstens eine Luftleitkörper, die erste Staulippe und die zweite Staulippe als integrales Bauteil ausgebildet.

Bevorzugt ist eine Ausführungsform, bei der auf der von der Fahrzeugaußenseite weg weisenden Seite des zumindest einen Kanals ein zweiter Luftleitkörper vorgesehen ist, der vom Unterboden-Verkleidungsteil nach unten in Richtung auf die Fahrbahn absteht, und die zweite Staulippe in Fahrtrichtung hinter dem zweiten Luftleitkörper oder an dessen rückwärtigem Ende angeordnet ist und nach unten in Richtung zur Fahrbahn über den zweiten Luftleitkörper hervorsteht.

Dabei ist es vorteilhaft, wenn der erste Luftleitkörper und die erste Staulippe als ein erstes integrales Bauteil ausgebildet sind, und wenn der zweite Luftleitkörper und die zweite Staulippe als ein zweites integrales Bauteil ausgebildet sind.

Vorzugsweise ist dabei das erste integrale Bauteil vom zweiten integralen Bauteil räumlich getrennt angeordnet, wobei der wenigstens eine Kanal zwischen dem ersten integralen Bauteil und dem zweiten integralen Bauteil ausgebildet ist.

Alternativ dazu können das erste integrale Bauteil, das zweite integrale Bauteil und der wenigstens eine Kanal als ein einziges Bauteil ausgebildet sein, wobei der wenigstens eine Kanal zwischen dem ersten integralen Bauteil und dem zweiten integralen Bauteil ausgebildet ist.

In einer anderen Ausführungsform der Erfindung weist der wenigstens eine Kanal weiter eine Rampe auf, die von einer Frontseite des Fahrzeugs zum Spalt hin verläuft.

Dabei zeichnet sich ein vorteilhafte Weiterbildung dadurch aus, dass die Rampe in einem Unterbodenteil des Fahrzeugs ausgebildet ist. Alternativ kann die Rampe in der Luftleiteinrichtung integral ausgebildet sein.

Besonders vorteilhaft ist eine Ausführungsform der Erfindung, bei der eine Höhe und/oder eine Breite des Kanals in Richtung zum Fahrzeugrad hin zunimmt.

Von Vorteil ist auch, wenn der wenigstens eine Kanal ein NACA-Profil aufweist.

Vorzugsweise ist die Luftleitanordnung als einstückiges Bauteil ausgebildet.

Gemäß einem weiteren Aspekt ist ein Fahrzeug, insbesondere ein PKW, mit der oben beschriebenen Luftleitanordnung angegeben. Die zumindest eine Luftleitanordnung ist im Bereich vor einem Fahrzeugrad angeordnet und steht nach unten in Richtung der Fahrbahn ab.

Bevorzugterweise ist die zumindest eine Luftleitanordnung einstückig mit einer Radhausschale des Fahrzeugs ausgebildet.

Die Luftleitanordnung gemäß den hier beschriebenen Ausführungsformen verbessert die konvektive Wärmeabfuhr an den Bremsenkomponenten, den Luftwiderstandsbeiwert und die Auftriebsbalance.

Die Luftleitanordnung kann modular oder teilmodular aufgebaut sein oder sie kann komplett als ein integrales Bauteil ausgeführt sein oder sie kann sogar mit der gesamten zugeordneten Radhausschale des Fahrzeugs als ein integrales Bauteil ausgeführt sein.

Die Luftleitanordnung oder deren Komponenten können aus einem flexiblen Material bestehen, welches bei Beaufschlagung durch fluidmechanische Kräfte nicht, oder sehr wenig verformt wird, jedoch bei mechanischer Kontaktbelastung wie sie zum Beispiel bei einer Bordstein Auf- oder Abfahrt auftreten kann, elastische Verformungen zulässt. Als gut geeignet erweisen sich Kunststoffe mit einer Shore-Härte von 60 bis 80.

### Kurze Beschreibung der Zeichnungen

Ausführungsbeispiele der Erfindung sind in den Figuren dargestellt und werden im Folgenden näher beschrieben. Es zeigen:
- Fig. 1A bis 1C: schematische Darstellungen einer Luftleitanordnung gemäß einer ersten Ausführungsform der Offenbarung;
- Fig. 2A bis 2C: schematische Darstellungen einer Luftleitanordnung gemäß einer zweiten Ausführungsform der Offenbarung;
- Fig. 3A und 3B: schematische Darstellungen einer Luftleitanordnung gemäß einer dritten Ausführungsform der Offenbarung;
- Fig. 4A bis 4C: schematische Darstellungen einer Luftleitanordnung gemäß einer vierten Ausführungsform der Offenbarung;
- Fig. 5A und 5B: schematische Darstellungen einer Luftleitanordnung gemäß einer fünften Ausführungsform der Offenbarung.

### Ausführungsformen der Erfindung

Im Folgenden werden, sofern nicht anders vermerkt, für gleiche und gleichwirkende Elemente gleiche Bezugszeichen verwendet.

Gemäß einem Aspekt der vorliegenden Erfindung ist eine Luftleitanordnung für ein Fahrzeug angegeben, die im Bereich vor einem Fahrzeugrad angeordnet ist und nach unten in Richtung der Fahrbahn absteht. Die Luftleitanordnung umfasst wenigstens einen Luftleitkörper, wenigstens eine Staulippe und wenigstens einen Kanal, der so ausgelegt ist, dass die konvektive Kühlung der Bremsenkomponenten verbessert wird. Ein Teil des Fahrtwindes wird dazu in Richtung der Bremsanlage geleitet. Der Luftleitkörper kann insbesondere ein passiver Staukörper sein.

Die Luftleitanordnung gemäß den hier beschriebenen Ausführungsformen verbessert eine konvektive Wärmeabfuhr an den Bremsenkomponenten, insbesondere an den vorderen Bremsenkomponenten. Sie verbessert darüber hinaus den Luftwiderstandsbeiwert des Fahrzeugs und die Auftriebsbalance.

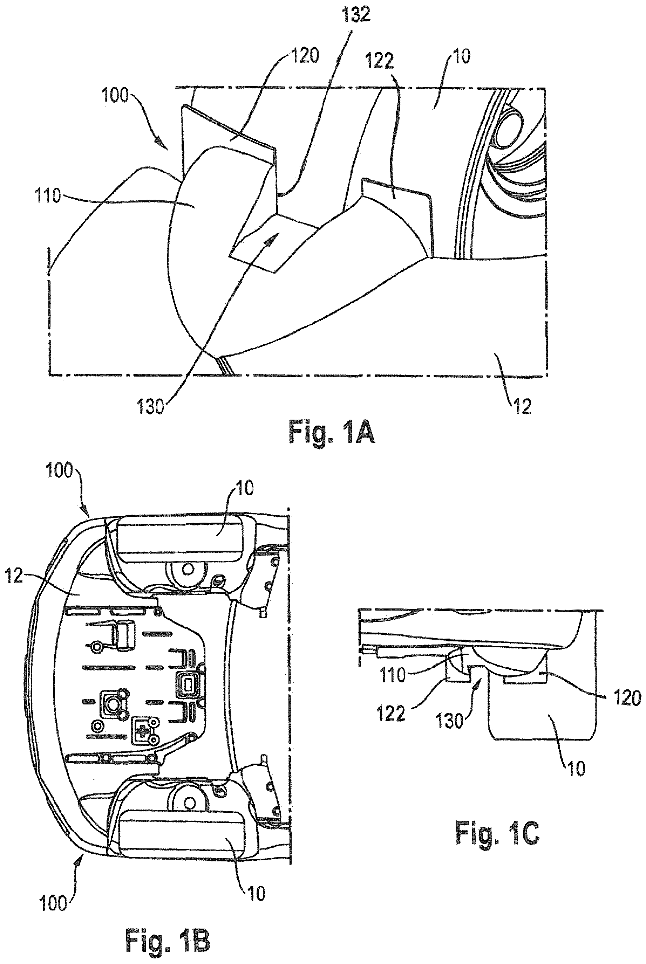

Fig. 1A bis 1C zeigen schematische Darstellungen einer Luftleitanordnung 100 gemäß einer ersten Ausführungsform der Erfindung.

Gemäß der ersten Ausführungsform ist die Luftleitanordnung 100 im Bereich vor dem Fahrzeugrad 10 angeordnet, und ist insbesondere an einem Unterboden 12 des Fahrzeugs angeordnet oder montiert. Die Luftleitanordnung 100 umfasst den wenigstens einen Luftleitkörper 110, eine äußere Staulippe 120, eine innere Staulippe 122 und wenigstens einen Kanal 130, der ausgelegt ist, um Luft in Richtung der Bremsanlage des Fahrzeugrades 10 zu leiten. Der Luftleitkörper 110 kann auch als "Displacer" oder auch als Radanlaufkörper bezeichnet werden. Gemäß Ausführungsformen, die mit anderen hier beschriebenen Ausführungsformen kombiniert werden können, sind die Staulippen 120, 122 zwischen dem wenigstens einen Luftleitkörper 110 und dem Fahrzeugrad 10 angeordnet. Im Beispiel der Figuren 1A bis 1C können die Staulippen 120, 122 auch als eine durch eine einen Spalt 132 bildende Öffnung des Kanals 130 in zwei Abschnitte geteilte Staulippe angesehen werden.

Gemäß einigen Ausführungsformen der Erfindung ist der wenigstens eine Kanal 130 im Luftleitkörper 110 ausgebildet. Beispielsweise kann eine Höhe und/oder eine Breite des Kanals 130 in Richtung zum Fahrzeugrad 10 zunehmen. In einigen Implementierungen können der wenigstens eine Luftleitkörper 110, die wenigstens eine Staulippe 120, 122 und der wenigstens eine Kanal 130 als integrales Bauteil ausgebildet sein. Unter dem Begriff "integrales Bauteil" wird ein einstückig ausgebildetes Bauteil verstanden. Mit anderen Worten bilden der wenigstens eine Luftleitkörper 110, die wenigstens eine Staulippe 120, 122 und der wenigstens eine Kanal 130 ein einziges Bauteil.

In typischen Ausführungsformen, die mit anderen Ausführungsformen kombiniert werden können, bildet der wenigstens eine Kanal einen strömungsgünstigen Lufteinlass aus; beispielsweise weist er eine NACA-Öffnung auf oder er ist in Form einer Düse oder eines Diffusors ausgebildet oder mit einer Einlauframpe versehen. Der Kanal kann aber auch einfach ein Kanal ohne Höhen/Breitenänderung sein. Auch kann die Oberfläche einer oder mehrerer der Kanalwände zumindest bereichsweise mit einer Oberflächenstruktur (zum Beispiel Rippen, Noppen oder Eindellungen) versehen sein.

Beispielsweise beginnt ein Eingang des Kanals, der auch als "NACA-Eingang" bezeichnet werden kann, tangential auf der Kontur des Luftleitkörpers oder Displacers 110, und vergrößert sich in Richtung der Staulippen 120, 122 in der Breite und/oder Höhe. Die Profilkurven sind NACA-Kurven, und die so erzeugte Aussparung (auch als "Ausschnitt" oder "Verprägung" bezeichnet) verbessert beispielsweise die konvektive Bremsenkühlung.

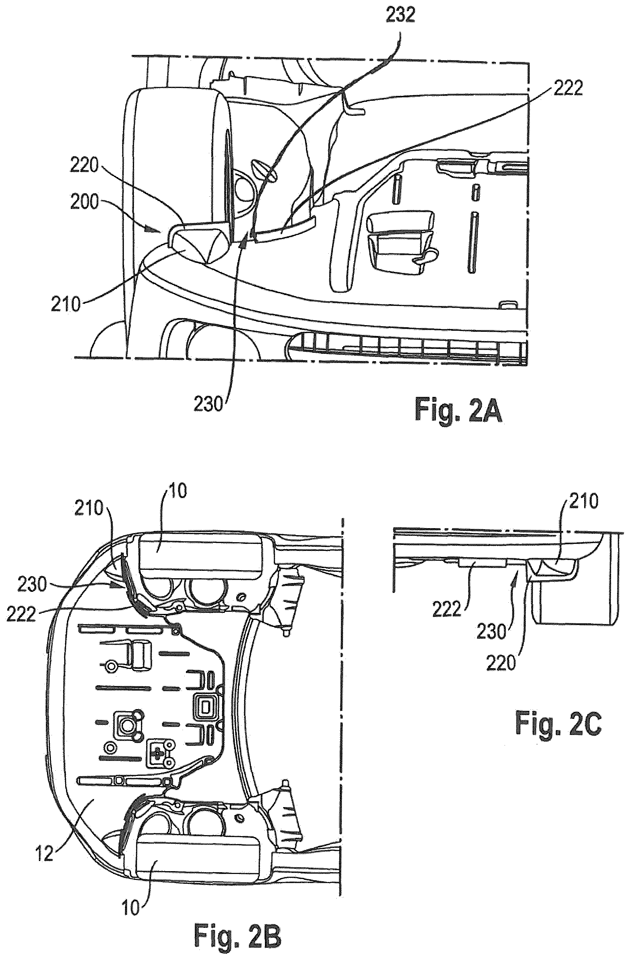

Fig. 2A bis 2C zeigen schematische Darstellungen einer Luftleitanordnung 200 gemäß einer zweiten Ausführungsform der Offenbarung.

Gemäß dieser zweiten Ausführungsform umfasst die Luftleitanordnung 200 eine erste Staulippe 220 und eine zweite Staulippe 222, wobei der wenigstens eine Kanal 230 einen Spalt 232 zwischen der ersten Staulippe 220 und der zweiten Staulippe 222 umfasst. Beispielsweise kann der Spalt den Kanal 230 bilden oder der Kanal 230 sein. Der wenigstens eine Luftleitkörper 210 und die erste Staulippe 220 können als integrales Bauteil ausgebildet sein, und die zweite Staulippe 222 kann ein davon räumlich getrenntes Bauteil sein.

Die innenseitige, zweite Staulippe 222 dient neben der Beeinflussung der Auftriebsbeiwerte auch der Verbesserung der konvektiven Bremskühlung. Die Kombination aus der zweiten Staulippe 222 und dem Spalt zwischen den beiden Staulippen 220, 222 bündelt die Unterbodenströmung und führt diese beispielsweise in die Felge. Gemäß einigen beispielhaften Ausführungsformen kann der Spalt eine Größe oder Breite von etwa 10 bis etwa 100 mm aufweisen, und kann vorzugsweise eine Größe oder Breite von beispielsweise etwa 30 bis etwa 70 mm aufweisen.

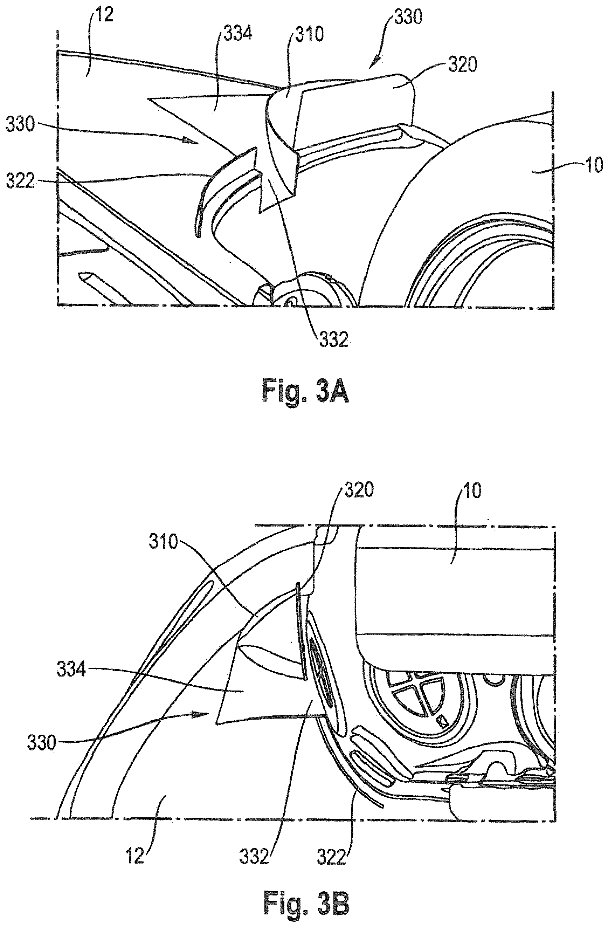

Fig. 3A und 3B zeigen schematische Darstellungen einer Luftleitanordnung 300 gemäß einer dritten Ausführungsform der Offenbarung.

Gemäß einigen Ausführungsformen umfasst die Luftleitanordnung 300 eine erste Staulippe 320 und eine zweite Staulippe 322, wobei der wenigstens eine Kanal 330 einen Spalt 332 zwischen der ersten Staulippe 320 und der zweiten Staulippe 322 umfasst. Der wenigstens eine Luftleitkörper 310 und die erste Staulippe 320 können als integrales Bauteil ausgebildet sein, und die zweite Staulippe 322 kann ein davon räumlich getrenntes Bauteil sein.

Gemäß einigen Ausführungsformen, die mit anderen hier beschriebenen Ausführungsformen kombiniert werden können, weist der wenigstens eine Kanal 330 weiter eine Rampe 334 auf, die von einer Frontseite des Fahrzeugs zum Spalt 332 hin verläuft. Typischerweise ist die Rampe 334 in einem Unterbodenteil des Fahrzeugs ausgebildet. Beispielsweise kann die Rampe 334 als Vertiefung im Unterboden 12 des Fahrzeugs ausgebildet sein. Die gesamte Anordnung kann ein, vorzugsweise einstückiges, Bauteil sein oder sie kann sogar mit der gesamten Radhausschale als ein integrales Bauteil gefertigt sein.

Die Rampe 334 zwischen den beiden Staulippen 320, 322 kann einen verstärkten Luftstrom in das Radhaus und von dort in die rotierende Felge erzeugen. Dadurch kann die konvektive Bremskühlung beispielsweise durch direkte oder indirekte Einströmung verbessert werden.

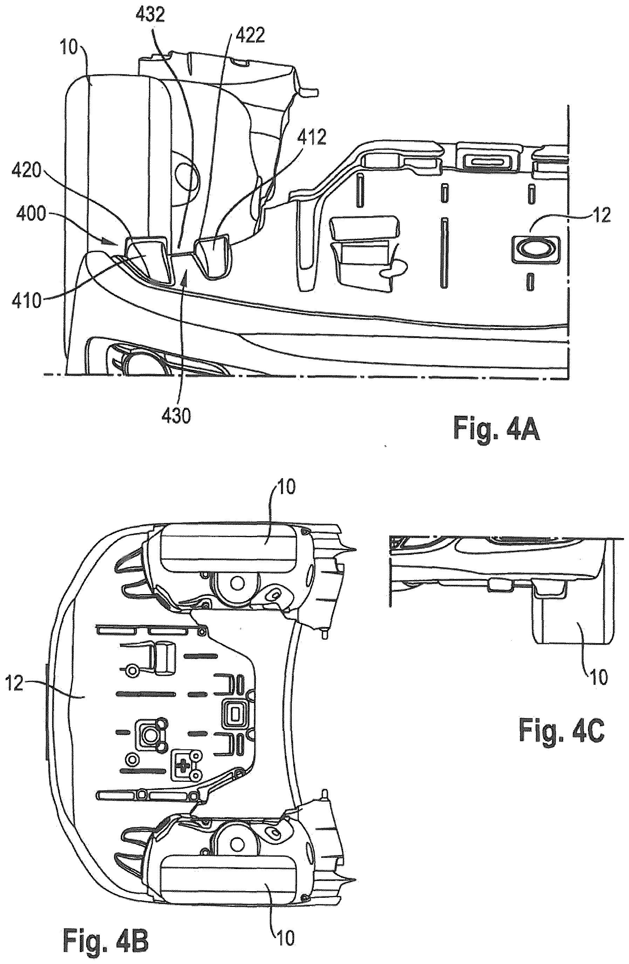

Fig. 4A bis 4C zeigen schematische Darstellungen einer Luftleitanordnung 400 gemäß einer vierten Ausführungsform der Offenbarung.

Gemäß einigen Ausführungsformen umfasst die Luftleitanordnung 400 einen ersten Luftleitkörper 410, einen zweiten Luftleitkörper 412, eine erste Staulippe 420 und eine zweite Staulippe 422, wobei der erste Luftleitkörper 410 und die erste Staulippe 420 als ein erstes integrales Bauteil ausgebildet sein können, und wobei der zweite Luftleitkörper 412 und die zweite Staulippe 422 als ein zweites integrales Bauteil ausgebildet sein können. Auch hier gilt, dass die komplette Luftleitanordnung ein integrales Bauteil sein kann oder beispielsweise sogar die Luftleitanordnung und die zugeordnete Radhausschale zu einem integralen Bauteil kombiniert sein können. Beispielsweise können das erste integrale Bauteil und das zweite integrale Bauteil räumlich getrennt voneinander angeordnet sein. In anderen Worten sind das erste integrale Bauteil und das zweite integrale Bauteil separate Bauteile, die getrennt voneinander beispielsweise am Unterboden 12 des Fahrzeugs montiert werden können.

Typischerweise ist der wenigstens eine Kanal 430 zwischen dem ersten integralen Bauteil und dem zweiten integralen Bauteil ausgebildet. In anderen Worten wird der wenigstens eine Kanal 430 durch den einen Spalt 432 bildenden Abstand zwischen dem ersten integralen Bauteil und dem zweiten integralen Bauteil gebildet.

Das zweite, innenseitige integrale Bauteil, und insbesondere der zweite innenseitige Luftleitkörper oder Displacer 412, verbessert eine Strömungsbündelung am Unterboden 12 des Fahrzeugs. Zudem kann das zweite, innenseitige integrale Bauteil, und insbesondere der zweite innenseitige Luftleitkörper oder Displacer 412, den Luftwiderstand des Fahrzeugs reduzieren und / oder die Balance optimieren.

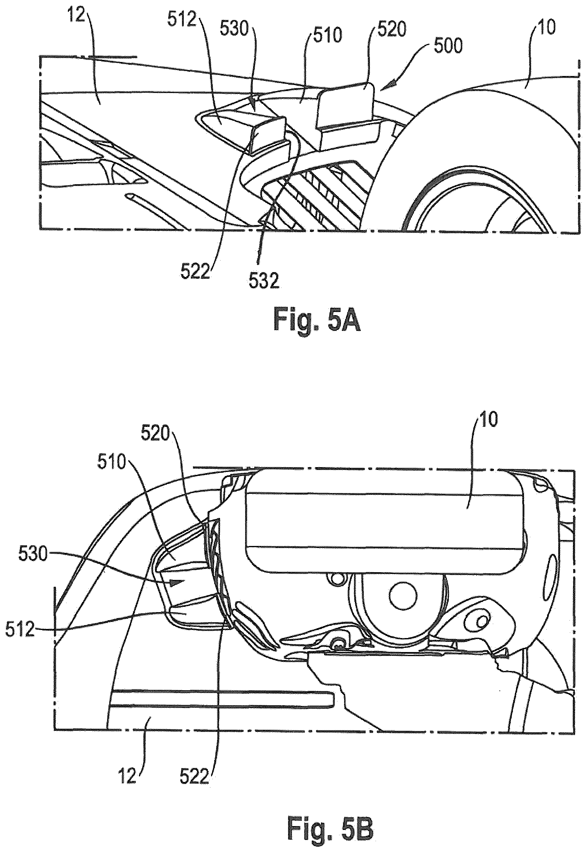

Fig. 5A und 5B zeigen schematische Darstellungen einer Luftleitanordnung 500 gemäß einer fünften Ausführungsform der Offenbarung.

Gemäß dieser Ausführungsform umfasst die Luftleitanordnung 500 einen ersten Luftleitkörper 510, einen zweiten Luftleitkörper 512, eine erste Staulippe 520 und eine zweite Staulippe 522, wobei der erste Luftleitkörper 510 und die erste Staulippe 520 als ein erstes integrales Bauteil ausgebildet sein können, und wobei der zweite Luftleitkörper 512 und die zweite Staulippe 522 als ein zweites integrales Bauteil ausgebildet sein können.

Wie im Beispiel der Fig. 5A und 5B gezeigt ist, können das erste integrale Bauteil, das zweite integrale Bauteil und der wenigstens eine Kanal 530 als ein einziges Bauteil ausgebildet sein, wobei der Kanal 530 unter Ausbildung eines Spaltes 532 zwischen dem ersten integralen Bauteil und dem zweiten integralen Bauteil ausgebildet sein kann. Der Kanal 530 kann beispielsweise die unter Bezugnahme auf die Fig. 3A bis 3C beschriebene Rampe umfassen oder auch eine NACA Öffnung aufweisen.

Die vorliegende Offenbarung aller Ausführungsbeispiele bietet eine verbesserte Luftleitanordnung hinsichtlich einer Luftwiderstandsreduktion und eine Auftriebseinstellung, und ermöglicht weiter eine gezielte Luftzufuhr an die Bremsenkomponenten. Durch eine Erhöhung der Luftzirkulation in der Felge kann eine verbesserte Bremsenkühlung erreicht werden. Diese Verbesserungen werden insbesondere durch die Form oder Gestaltung und die Bereitstellung/Anordnung mehrerer Elemente wie der Staulippen und/oder Luftleitkörper erreicht.

## Patentansprüche

1. Luftleitanordnung (100, 200, 300, 400, 500) für ein Fahrzeug, die im Bereich vor einem mit einer Bremsanlage funktional verbundenen Fahrzeugrad (10) angeordnet ist, mit
- zumindest einem vor dem Fahrzeugrad positionierten Luftleitkörper (110, 210, 310, 410, 510), der von einem Unterboden-Verkleidungsteil (12) nach unten in Richtung der Fahrbahn absteht, und
- zumindest einem im Luftleitkörper (110, 210, 310, 410, 510) oder auf der von der Fahrzeugaußenseite weg weisenden Seite des Luftleitkörpers (210, 310, 410, 510) gelegenen Kanal (130, 230, 330, 430, 530), der ausgelegt ist, um anströmende Fahrtluft in Richtung der Bremsanlage zu leiten,
**dadurch gekennzeichnet,**
- **dass** der Luftleitkörper (110, 210, 310, 410, 510) eine erste Staulippe (120, 220, 320, 420, 520) aufweist, die zwischen dem Luftleitkörper (110, 210, 310, 410, 510) und dem Fahrzeugrad (10) angeordnet ist und die nach unten in Richtung auf die Fahrbahn über den Luftleitkörper (110, 210, 310, 410, 510) hervorsteht, und
- **dass** auf der von der Fahrzeugaußenseite weg weisenden Seite des zumindest einen Kanals (130, 230, 330, 430, 530) eine zweite Staulippe (122, 222, 322, 422, 522) vorgesehen ist, so dass der zumindest eine Kanal (130, 230, 330, 430, 530) einen Spalt (132, 232, 332, 432, 532) zwischen der ersten Staulippe (120, 220, 320, 420, 520) und der zweiten Staulippe (122, 222, 322, 422, 522) umfasst.

2. Luftleitanordnung (100) nach Anspruch 1,
**dadurch gekennzeichnet,**
**dass** der wenigstens eine Luftleitkörper (110), die wenigstens eine Staulippe (120) und der wenigstens eine Kanal (130) als integrales Bauteil ausgebildet sind.

3. Luftleitanordnung (200, 300, 400, 500) nach Anspruch 1,
**dadurch gekennzeichnet,**
**dass** der wenigstens eine Luftleitkörper (210, 310, 410, 510) und die erste Staulippe (220, 320, 420, 520) als integrales Bauteil ausgebildet sind, und wobei die zweite Staulippe (222, 322, 422, 522) ein davon räumlich getrenntes Bauteil ist.

4. Luftleitanordnung nach Anspruch 1,
**dadurch gekennzeichnet,**
**dass** der wenigstens eine Luftleitkörper (210, 310), die erste Staulippe (220, 320) und die zweite Staulippe (222, 322) als integrales Bauteil ausgebildet sind.

5. Luftleitanordnung (400, 500) nach Anspruch 1,
**dadurch gekennzeichnet,**
- **dass** auf der von der Fahrzeugaußenseite weg weisenden Seite des zumindest einen Kanals (430, 530) ein zweiter Luftleitkörper (412, 512) vorgesehen ist, der vom Unterboden-Verkleidungsteil (12) nach unten in Richtung auf die Fahrbahn absteht, und
- **dass** die zweite Staulippe (422, 522) in Fahrtrichtung hinter dem zweiten Luftleitkörper (412, 512) oder an dessen rückwärtigem Ende angeordnet ist und nach unten in Richtung zur Fahrbahn über den zweiten Luftleitkörper (412, 512) hervorsteht.

6. Luftleitanordnung (400, 500) nach Anspruch 5,
**dadurch gekennzeichnet,**
**dass** der erste Luftleitkörper (410, 510) und die erste Staulippe (420, 520) als ein erstes integrales Bauteil ausgebildet sind, und
**dass** der zweite Luftleitkörper (412, 512) und die zweite Staulippe (422, 522) als ein zweites integrales Bauteil ausgebildet sind.

7. Luftleitanordnung (400, 500) nach Anspruch 6,
**dadurch gekennzeichnet,**
**dass** das erste integrale Bauteil vom zweiten integralen Bauteil räumlich getrennt angeordnet ist, wobei der wenigstens eine Kanal (430, 530) zwischen dem ersten integralen Bauteil und dem zweiten integralen Bauteil ausgebildet ist.

8. Luftleitanordnung (400, 500) nach Anspruch 6,
**dadurch gekennzeichnet,**
**dass** das erste integrale Bauteil, das zweite integrale Bauteil und der wenigstens eine Kanal (430, 530) als ein einziges Bauteil ausgebildet sind, wobei der wenigstens eine Kanal (430, 530) zwischen dem ersten integralen Bauteil und dem zweiten integralen Bauteil ausgebildet ist.

9. Luftleitanordnung (300, 500) nach einem der vorhergehenden Ansprüche,
**dadurch gekennzeichnet,**
**dass** der wenigstens eine Kanal (330, 530) weiter eine Rampe (334, 534) aufweist, die von einer Frontseite des Fahrzeugs zum Spalt (332, 532) hin verläuft.

10. Luftleitanordnung (300, 500) nach Anspruch 9,
**dadurch gekennzeichnet,**
**dass** die Rampe (334, 534) in einem Unterbodenteil (12) des Fahrzeugs ausgebildet ist.

11. Luftleitanordnung (300, 500) nach Anspruch 9,
**dadurch gekennzeichnet,**
**dass** die Rampe (334, 534) in der Luftleiteinrichtung integral ausgebildet ist.

12. Luftleitanordnung (100, 300, 500) nach einem der vorhergehenden Ansprüche,
**dadurch gekennzeichnet,**
**dass** eine Höhe und/oder eine Breite des Kanals (130, 330, 530) in Richtung zum Fahrzeugrad (10) hin zunimmt.

13. Luftleitanordnung (100, 300, 500) nach einem der vorhergehenden Ansprüche,
**dadurch gekennzeichnet,**
**dass** der wenigstens eine Kanal (130, 330, 530) ein NACA-Profil aufweist.

14. Luftleitanordnung (100, 200, 300, 400, 500) nach einem der vorhergehenden Ansprüche,
**dadurch gekennzeichnet,**
**dass** die Luftleitanordnung (100, 200, 300, 400, 500) als einstückiges Bauteil ausgebildet ist.

15. Fahrzeug mit zumindest einer Luftleitanordnung (100, 200, 300, 400, 500) nach einem der vorhergehenden Ansprüche.

16. Fahrzeug nach Anspruch 15,
**dadurch gekennzeichnet,**
**dass** die zumindest eine Luftleitanordnung (100, 200, 300, 400, 500) einstückig mit einer Radhausschale des Fahrzeugs ausgebildet ist.

## Claims

1. An air guidance arrangement (100, 200, 300, 400, 500) for a vehicle, which arrangement is arranged in the region in front of a vehicle wheel (10) which is functionally connected to a braking system, having
- at least one air guidance body (110, 210, 310, 410, 510) positioned in front of the vehicle wheel, which body protrudes from an underbody trim part (12) downwards in the direction of the roadway, and
- at least one channel (130, 230, 330, 430, 530) located in the air guidance body (110, 210, 310, 410, 510) or on the side of the air guidance body (210, 310, 410, 510) pointing away from the outside of the vehicle, which channel is designed to guide incoming travelling air in the direction of the braking system,
**characterised in that**
- the air guidance body (110, 210, 310, 410, 510) has a first retaining lip (120, 220, 320, 420, 520) which is arranged between the air guidance body (110, 210, 310, 410, 510) and the vehicle wheel (10) and which projects downwards in the direction of the roadway over the air guidance body (110, 210, 310, 410, 510), and
- a second retaining lip (122, 222, 322, 422, 522) is provided on the side of the at least one channel (130, 230, 330, 430, 530) facing away from the outside of the vehicle, so that the at least one channel (130, 230, 330, 430, 530) comprises a gap (132, 232, 332, 432, 532) between the first retaining lip (120, 220, 320, 420, 520) and the second retaining lip (122, 222, 322, 422, 522).

2. An air guidance arrangement (100) according to Claim 1,
**characterised in that**
the at least one air guidance body (110), the at least one retaining lip (120) and the at least one channel (130) are designed as an integral component.

3. An air guidance arrangement (200, 300, 400, 500) according to Claim 1,
**characterised in that**
the at least one air guidance body (210, 310, 410, 510) and the first retaining lip (220, 320, 420, 520) are designed as an integral component, and the second retaining lip (222, 322, 422, 522) being a component which is spatially separated therefrom.

4. An air guidance arrangement according to Claim 1,
**characterised in that**
the at least one air guidance body (210, 310), the first retaining lip (220, 320) and the second retaining lip (222, 322) are designed as an integral component.

5. An air guidance arrangement (400, 500) according to Claim 1,
**characterised in that**
- a second air guidance body (412, 512) is provided on the side of the at least one channel (430, 530) pointing away from the outside of the vehicle, which body projects downwards in the direction of the roadway from the underbody trim part (12), and
- the second retaining lip (422, 522) is arranged in the direction of travel after the second air guidance body (412, 512) or on the rearward end thereof and projects downwards in the direction of the roadway over the second air guidance body (412, 512).

6. An air guidance arrangement (400, 500) according to Claim 5,
**characterised in that**
the first air guidance body (410, 510) and the first retaining lip (420, 520) are designed as a first integral component, and **in that** the second air guidance body (412, 512) and the second retaining lip (422, 522) are designed as a second integral component.

7. An air guidance arrangement (400, 500) according to Claim 6,
**characterised in that**
the first integral component is arranged spatially separated from the second integral component, the at least one channel (430, 530) being formed between the first integral component and the second integral component.

8. An air guidance arrangement (400, 500) according to Claim 6,
**characterised in that**
the first integral component, the second integral component and the at least one channel (430, 530) are designed as a single component, the at least one channel (430, 530) being formed between the first integral component and the second integral component.

9. An air guidance arrangement (300, 500) according to one of the preceding claims,
**characterised in that**
the at least one channel (330, 530) furthermore has a ramp (334, 534) which runs from a front side of the vehicle towards the gap (332, 532).

10. An air guidance arrangement (300, 500) according to Claim 9,
**characterised in that**
the ramp (334, 534) is formed in an underbody part (12) of the vehicle.

11. An air guidance arrangement (300, 500) according to Claim 9,
**characterised in that**
the ramp (334, 534) is formed integrally in the air-guidance means.

12. An air guidance arrangement (100, 300, 500) according to one of the preceding claims,
**characterised in that**
a height and/or a width of the channel (130, 330, 530) increases in the direction towards the vehicle wheel (10).

13. An air guidance arrangement (100, 300, 500) according to one of the preceding claims,
**characterised in that**
the at least one channel (130, 330, 530) has a NACA profile.

14. An air guidance arrangement (100, 200, 300, 400, 500) according to one of the preceding claims,
**characterised in that**
the air guidance arrangement (100, 200, 300, 400, 500) is designed as a one-piece component.

15. A vehicle with at least one air guidance arrangement (100, 200, 300, 400, 500) according to one of the preceding claims.

16. A vehicle according to Claim 15,
**characterised in that**
the at least one air guidance arrangement (100, 200, 300, 400, 500) is designed in one piece with a wheel housing shell of the vehicle.

## Revendications

1. Dispositif de guidage de l'air (100, 200, 300, 400, 500) destiné à un véhicule qui est monté dans la zone située à l'avant d'une roue du véhicule (10) reliée fonctionnellement à une installation de freins, comportant :
- au moins un corps de guidage de l'air (110, 210, 310, 410, 510) situé à l'avant de la roue du véhicule, qui s'étend vers le bas en direction de la chaussée à partir d'un élément d'habillage du bas de caisse (12), et
- au moins un canal (130, 230, 330, 430, 530) positionné dans le corps de guidage de l'air (110, 210, 310, 410, 510) ou sur le côté du corps de guidage de l'air (210, 310, 410, 510) s'éloignant du côté externe du véhicule, qui est réalisé pour transférer l'air de déplacement soufflé en direction de l'installation de freins,
**caractérisé en ce que**
- le corps de guidage de l'air (110, 210, 310, 410, 510) comporte une première lèvre de retenue (120, 220, 320, 420, 520) qui est montée entre le corps de guidage de l'air (110, 210, 310, 410, 510) et la roue du véhicule (10) et qui dépasse vers le bas du corps de guidage de l'air (110, 210, 310, 410, 510) en direction de la chaussée, et
- sur la face du canal (130, 230, 330, 430, 530) s'éloignant du côté externe du véhicule il est prévu une seconde lèvre de retenue (122, 222, 322, 422, 522) de sorte que le canal (130, 230, 330, 430, 530) entoure un intervalle (132, 232, 332, 432, 532) situé entre la première lèvre de retenue (120, 220, 320, 420, 520) et la seconde lèvre de retenue (122, 222, 322, 422, 522).

2. Dispositif de guidage de l'air (100) conforme à la revendication 1,
**caractérisé en ce que**
le corps de guidage de l'air (110), la lèvre de retenue (120) et le canal (130) sont réalisés sous la forme d'un élément intégré.

3. Dispositif de guidage de l'air (200, 300, 400, 500) conforme à la revendication 1,
**caractérisé en ce que**
le corps de guidage de l'air (210, 310, 410, 510) et la première lèvre de retenue (220, 320, 420, 520) sont réalisés sous la forme d'un élément intégré, et la seconde lèvre de retenue (222, 322, 422, 522) est un élément séparé dans l'espace de cet élément intégré.

4. Dispositif de guidage de l'air conforme à la revendication 1,
**caractérisé en ce que**
le corps de guidage de l'air (210, 310), la première lèvre de retenue (220, 320) et la seconde lèvre de retenue (222, 322) sont réalisés sous la forme d'un élément intégré.

5. Dispositif de guidage de l'air (400, 500) conforme à la revendication 1,
**caractérisé en ce qu'**
il est prévu sur le côté du canal (430, 530) s'éloignant du côté externe du véhicule un second corps de guidage de l'air (412, 512) qui s'écarte vers le bas en direction de la chaussée de la pièce d'habillage du bas de caisse (12), et
la seconde lèvre de retenue (422, 522) est montée à l'arrière du second corps de guidage de l'air (412, 512) ou à son extrémité arrière, dans la direction de déplacement et dépasse vers le bas en direction de la chaussée du second corps de guidage de l'air (412, 512).

6. Dispositif de guidage de l'air (400, 500) conforme à la revendication 5,
**caractérisé en ce que**
le premier corps de guidage de l'air (410, 510) et la première lèvre de retenue (420, 520) sont réalisés sous la forme d'un premier élément intégré, et le second corps de guidage de l'air (412, 512) et la seconde lèvre de retenue (422, 522) sont réalisés sous la forme d'un second élément intégré.

7. Dispositif de guidage de l'air (400, 500) conforme à la revendication 6,
**caractérisé en ce que**
le premier élément intégré est séparé dans l'espace du second élément intégré, et le canal (430, 530) est situé entre le premier élément intégré et le second élément intégré.

8. Dispositif de guidage de l'air (400, 500) conforme à la revendication 6,
**caractérisé en ce que**
le premier élément intégré, le second élément intégré et le canal (430, 530) sont réalisés sous la forme d'un élément unique, et le canal (430, 530) est situé entre le premier élément intégré et le second élément intégré.

9. Dispositif de guidage de l'air (300, 500) conforme à l'une des revendications précédentes,
**caractérisé en ce que**
le canal (330, 530) comporte en outre une rampe (334, 534) qui s'étend du côté frontal du véhicule vers l'intervalle (332, 532).

10. Dispositif de guidage de l'air (300, 500) conforme à la revendication 9,
**caractérisé en ce que**
la rampe (334, 534) est réalisée dans une partie du bas de caisse (12) du véhicule.

11. Dispositif de guidage de l'air (300, 500) conforme à la revendication 9,
**caractérisé en ce que**
la rampe (334, 534) est réalisée intégralement dans le dispositif de guidage de l'air.

12. Dispositif de guidage de l'air (100, 300, 500) conforme à l'une des revendications précédentes,
**caractérisé en ce que**
la hauteur et/ou la largeur du canal (130, 330, 530) augmente(nt) en direction de la roue du véhicule.

13. Dispositif de guidage de l'air (100, 300, 500) conforme à l'une des revendications précédentes,
**caractérisé en ce que**
le canal (130, 330, 530) a un profil NACA.

14. Dispositif de guidage de l'air (100, 200, 300, 400, 500) conforme à l'une des revendications précédentes,
**caractérisé en ce qu'**
il est réalisé sous la forme d'un élément en une seule pièce.

15. Véhicule ayant au moins un dispositif de guidage de l'air (100, 200, 300, 400, 500) conforme à l'une quelconque des revendications précédentes.

16. Véhicule conforme à la revendication 15,
**caractérisé en ce que**
le dispositif de guidage de l'air (100, 200, 300, 400, 500) est réalisé en une seule pièce avec une coque enveloppe de la roue du véhicule.
